# EUROPÄISCHE PATENTANMELDUNG

(11) **EP 3 366 439 A1**
(43) Veröffentlichungstag der Anmeldung: **29.08.2018**
(21) Anmeldenummer: 17158221.6
(22) Anmeldetag: 27.02.2017
(51) Int. Cl.: B26D 7/12, B26D 1/15, B26D 5/00, B26D 7/06

(54) **SCHEIBENSCHNEIDEMASCHINE MIT MESSERÜBERWACHUNGSEINRICHTUNG**

(71) Anmelder: Bizerba SE & Co. KG, 72336 Balingen (DE)
(72) Erfinder: Bodmer, Markus, 72469 Meßstetten (DE); Steinhilber, Ralf, 72336 Balingen (DE)
(74) Vertreter: Kohler Schmid Möbus Patentanwälte

(57) **Zusammenfassung**

Eine elektrisch betriebene Scheibenschneidemaschine (1) zum Abschneiden von Scheiben aus strangförmigem Schneidgut mit einer Schneideeinrichtung (2), die ein von einem elektrischen Messermotor (15) angetriebenes, rotierendes Kreismesser (3) umfasst, und mit einer Messerüberwachungseinrichtung (4) zur Überwachung des Zustands des Kreismessers, ist dadurch gekennzeichnet, dass sie eine Strommessvorrichtung (17) zur Messung des Messermotorstroms (I₁₀₀, I₁₀₁, I₁₀₂, I₁₀₃, I₁₀₄, I₁₀₅) aufweist. Bei einem Verfahren zur Überwachung der erfindungsgemäßen Scheibenschneidemaschine werden als Messdaten zur Eingabe in die Messerüberwachungseinrichtung der Messermotorstrom und/oder dessen zeitlicher Verlauf erfasst und es wird aus diesen Messdaten ein aktueller Schneidkennwert, insbesondere ein Verschmutzungskennwert (Kv) und/oder ein Abnutzungskennwert (K_{A}) und/oder ein Messerschärfekennwert (Kₛ), ermittelt. Damit lässt sich eine herkömmliche Scheibenschneidemaschine insbesondere hinsichtlich der Güte der Erfassung des aktuellen Zustandes des Kreismessers erheblich verbessern.

## Beschreibung

Die Erfindung betrifft ein elektrisch betriebene Scheibenschneidemaschine zum Abschneiden von Scheiben aus insbesondere strangförmigem Schneidgut, vorzugsweise Lebensmittel, mit einer Schneideeinrichtung, wobei die Schneideeinrichtung ein von einem elektrischen Messermotor angetriebenes, rotierendes Kreismesser umfasst, und mit einer Messerüberwachungseinrichtung zur Überwachung des Zustands des Kreismessers.

Eine derartige Scheibenschneidemaschine ist beispielsweise bekannt aus der US 8220383 B2 und der WO2007/078451 A2.

Im Laufe der Zeit nutzt sich durch den Betrieb das Kreismesser herkömmlicher Scheibenschneidemaschinen ab. Für einen ordnungsgemäßen Betrieb ist es daher erforderlich, das Kreismesser regelmäßig nachzuschärfen. Dazu kann ein Benutzer der Scheibenschneidemaschine - in der Regel manuell- eine Schleifvorrichtung, insbesondere mit einer Schleifscheibe, auf die Scheibenschneidemaschine bzw. auf das Kreismesser aufsetzen und ein spezielles Schleifprogramm für die Scheibenschneidemaschine starten.

Bei bisher üblichen Scheibenschneidemaschinen blieb es allein dem Benutzer überlassen, festzulegen ob überhaupt und wenn ja wann das Messer geschliffen werden muss. Der ideale Zeitpunkt zum Nachschliff wird daher oftmals verpasst, so dass je nach individuellem Benutzerverhalten das Kreismesser zu oft oder zu selten nachgeschliffen wird, das Schnittbild unnötigerweise unsauber ist und dergleichen. Bei zu häufigen Schleifvorgängen ergeben sich unnötige Produktionsausfälle mit entsprechenden Arbeitsunterbrechungen für die Schleif- und Reinigungsvorgänge. Eine erhöhte Abnutzung und dadurch erhöhte Ersatzteilkosten sind oftmals die Folge.

Aus den eingangs zitierten US 8220383 B2 und WO2007/078451 A2 sind gattungsgemäße Scheibenschneidemaschinen bekannt, die insbesondere eine Messerüberwachungseinrichtung zur Überwachung des Zustands des Kreismessers aufweisen.

Die Messerüberwachungseinrichtung erfasst dabei die Gesamtanzahl von Umdrehungen des Kreismessers bzw. die Standzeit des Kreismessers. Bei Überschreiten einer vorgegebenen Mindest-Umdrehungszahl bzw. -Standzeit wird dem Benutzer ein Hinweissignal gegeben, mit dem ein Nachschleifen des Kreismessers empfohlen wird. Somit können Schneideergebnisse und/oder Standzeiten auf einfache Weise verbessert werden.

Aus der Praxis ist jedoch bekannt, dass die reine Gesamtanzahl der Umdrehungen sowie auch die reine Standzeit keine hinreichend genauen Aussagen über den tatsächlichen Abnutzungsgrad des Kreismessers bzw. über den Gesamtzustand der Scheibenschneidemaschine liefern können. Beispielsweise können unterschiedlich harte oder unterschiedlich große zu schneidende Produkte bei gleichen Umdrehungsanzahlen der Maschine zu unterschiedlichen Abnutzungen des Kreismessers führen.

Aufgabe der Erfindung ist es demgegenüber, eine gattungsgemäße Scheibenschneidemaschine, insbesondere hinsichtlich der Güte der Erfassung des aktuellen Zustandes des Kreismessers, zu verbessern.

Gelöst wird diese Aufgabe auf technisch besonders einfache und überraschend wirkungsvolle Weise durch eine gattungsgemäße elektrisch betriebene Scheibenschneidemaschine, bei welcher die Messerüberwachungseinrichtung eine Strommessvorrichtung zur Messung des Messermotorstroms aufweist.

Untersuchungen haben ergeben, dass der Messermotorstrom und insbesondere dessen zeitlicher Verlauf besonders sensible Maße für aktuelle Zustandsparameter der Scheibenschneidemaschine, insbesondere für den Zustand des Kreismessers, darstellen. Dabei kann aus dem Messermotorstrom insbesondere sehr einfach auf die aktuell vom Messermotor aufgenommene elektrische Leistung geschlossen werden. Diese wiederum kann ein zuverlässiges Maß für den dem Messermotor durch das Schneidgut entgegengesetzten Widerstand darstellen. Dieser Widerstand wiederum ist eine Folge verschiedener Reibungseinflüsse, insbesondere aufgrund der Schneidevorgänge, Verschmutzungen der Scheibenschneidemaschine sowie Abnutzungen weiterer Teile der Scheibenschneidemaschine, beispielsweise von Antriebsriemen für das Kreismessers und dergleichen.

Der Messermotorstrom kann zudem ohne großen technischen Zusatzaufwand sehr leicht erfasst werden.

Somit kann der aktuelle Messermotorstrom gemessen werden und daraus dann auf besonders einfache Weise auf den Zustand der Scheibenschneidemaschine und insbesondere des Kreismessers geschlossen werden.

Hierfür kann die Scheibenschneidemaschine eine Steuereinheit aufweisen, die dazu eingerichtet ist, aus dem aktuell gemessenen Messermotorstrom und/oder dessen zeitlichen Verlauf einen Schneidkennwert, insbesondere einen Verschmutzungskennwert und/oder einen Abnutzungskennwert und/oder einen Messerschärfekennwert, zu ermitteln.

Es hat sich gezeigt, dass sich die Leistungsaufnahme des Messermotors und somit auch der Messermotorstrom in gut abgrenzbaren Bereichen während eines Schneidvorgangs bewegen. Indem beispielsweise die Steuereinheit auswertet, wie oft und jeweils wie lang sich die Leistungsaufnahme innerhalb dieser Bereiche befindet, kann die Steuereinheit erfassen, ob und wie viele Scheiben eines Schneidguts geschnitten werden. Hieraus lässt sich ohne weiteres ein Schneidkennwert, insbesondere ein Messerschärfekennwert, ableiten. Eine besonders präzise Messung lässt sich erreichen, wenn der Messermotorstrom und/oder der Verlauf des Messermotorstroms während des Schnitts einer einzelnen Scheibe verfolgt und erfasst werden. Beispielsweise kann dadurch ermittelt werden, welche Art von Schneidgut, beispielsweise Scheiben mit großem oder kleinem Durchmesser, jeweils aktuell geschnitten werden.

Ein Verschmutzungskennwert als Maß der Verschmutzung der Scheibenschneidemaschine kann die Steuereinheit beispielsweise aus der Leistungsaufnahme und/oder dem zeitlichen Verlauf der Leistungsaufnahme für Zeiten ermitteln, in denen das Kreismesser keine Scheiben schneidet. Beispielsweise kann dadurch ermittelt werden, ob Fett oder andere Partikel des Schneidguts zwischen einer Messerabdeckung und dem Kreismesser das Kreismesser bremsen. Ebenfalls lässt sich ein Abnutzungskennwert ermitteln, der indiziert, ob und inwieweit weitere Teile der Scheibenschneidemaschine abgenutzt sein können.

Somit lässt sich auf besonders einfache Weise eine Komfortfunktion für den Benutzer der Schneidemaschine realisieren. Er muss sich nicht mehr aktiv und aus eigenem Antrieb darum kümmern, ob beziehungsweise wann es notwendig wird, das Messer nachzuschleifen, da die Steuereinheit kontinuierlich und automatisch entsprechende Zustandsindikatoren ermitteln kann. Die Kreismesserstandzeit bzw. die Schneidemaschinenstandzeit lassen sich so ohne größeren Aufwand optimieren.

Bei besonders bevorzugten Ausführungsformen der Erfindung weist die Scheibenschneidemaschine eine Schleifüberwachungsvorrichtung zur Überwachung eines Schleifvorgangs mittels einer Messerschleifvorrichtung auf. Die Schleifüberwachungsvorrichtung kann insbesondere Teil der Messerüberwachungseinrichtung sein und/oder die Messerüberwachungseinrichtung kann die Funktion der Schleifüberwachungsvorrichtung übernehmen.

Hierfür kann vorgesehen sein, dass die Schleifüberwachungsvorrichtung dazu eingerichtet ist, den Messermotorstrom während eines Schleifvorgangs zu messen und auszuwerten.

Ein Schleifvorgang geht üblicherweise mit einer erhöhten Leistungsaufnahme und folglich mit einem besonders erhöhten Messermotorstrom einher. Ferner unterscheidet sich ein Schleifvorgang von einem herkömmlichen Schneidevorgang dadurch, dass bei ersterem die Leistungsaufnahme über einen längeren Zeitraum erhöht ist, wohingegen bei letzterem kurzzeitige, periodische Schwankungen (bedingt durch das Schneiden einzelner Scheiben) der Leistungsaufnahme bzw. des Messermotorstroms messbar sind.

An den Schleifvorgang schließt sich üblicherweise ein Abzieh- bzw. Entgratungsvorgang an. Dieser wiederum lässt sich leicht erkennen anhand eines kurzzeitigen Leistungsaufnahmeabfalls aufgrund eines Umschaltens auf einen Abziehstein oder Ähnlichem sowie einer darauffolgenden kurzzeitigen Leistungsaufnahmeerhöhung aufgrund des eigentlichen Entgratens. Dabei kann auch die Erkenntnis genutzt werden, dass die Stromaufnahme beim Entgraten aufgrund der Struktur üblicher Entgratungsscheiben sich in der Regel von der Stromaufnahme beim Schleifen unterscheidet, insbesondere die Stromaufnahme beim Schleifen übersteigt. Wird diese Leistungscharakteristik nach einem Schleifvorgang nicht von der Messerüberwachungseinrichtung erkannt, kann darauf zurückgeschlossen werden, dass der Entgratungsvorgang nicht stattgefunden hat. Dann kann dem Benutzer beispielsweise ein entsprechendes Hinweissignal signalisiert werden, dass der Entgratungsvorgang auszuführen ist.

Ferner kann die Schleifüberwachungsvorrichtung auch eingerichtet sein, selbst geringfügige Schwankungen, beispielsweise im Bereich von 1 bis 10 Prozent des durchschnittlichen Messermotorstroms während des Schleifvorgangs, zu erfassen und/oder auszuwerten. Dann kann auf besonders einfache Weise der Fortschritt des Schleifvorgangs verfolgt werden. Durch Erfassung der Leistungsaufnahme innerhalb des für das Schleifen relevanten Bereichs während des Schleifens kann ferner auf den Abnutzungsgrad der Schleifscheibe geschlossen werden.

Insbesondere kann, wenn die Leistungsaufnahme während des Schleifens einen vorgegebenen Wert unterschreitet, dies als Hinweis auf eine verbrauchte und somit auszutauschende Schleifscheibe, vorzugsweise durch die Steuereinheit, gewertet werden. Insbesondere kann anhand einer geringen Leistungsaufnahme während des Schleifens detektiert werden, ob die Schleifscheibe abgenutzt oder verschmutzt, insbesondere durch Fett verschmutzt, ist. Dann kann dem Benutzer beispielsweise ein entsprechendes Hinweissignal signalisiert werden, dass die Schleifscheibe auszutauschen ist.

Befindet sich die Leistungsaufnahme nicht im vorgesehenen Bereich, kann analog ein Hinweissignal ausgegeben werden, dass der Schleifvorgang nicht oder inkorrekt abläuft und/oder die Messerschleifvorrichtung falsch oder nicht montiert ist.

Die Scheibenschneidemaschine kann auch eine, vorzugsweise automatisch betreibbare, Messerschleifvorrichtung aufweisen.

Die Messerschleifvorrichtung kann manuell auf die Scheibenschneidemaschine aufsetzbar sein. Alternativ kann die Messerschleifvorrichtung aber auch an der Scheibenschneidemaschine fest angeordnet sein. Dann kann die Messerschleifvorrichtung in besonders vorteilhafter Weise für einen automatischen Betrieb eingerichtet sein. Beispielsweise kann sie so ausgebildet sein, dass sie bei Start eines Schleifprogramms automatisch in Betrieb gesetzt wird. Somit kann die Scheibenschneidemaschine, insbesondere die Steuereinheit, den Zustand des Kreismessers überwachen und bei Bedarf automatisch ein Schleifprogramm und damit die Messerschleifvorrichtung starten. Dadurch kann ein weiterer Komfortgewinn erzielt werden.

Auch kann vorgesehen sein, dass die Scheibenschneidemaschine eine Signalausgabeeinheit, insbesondere eine Displayeinheit und/oder eine Akustikausgabeeinheit, aufweist, mittels derer optisch und/oder akustisch auf die Notwendigkeit der Einleitung eines Messerschleifvorgangs hingewiesen werden kann. Mit einer solchen Signaleinheit lassen sich besonders einfach Hinweissignale an den Benutzer ausgeben. Beispielsweise kann dadurch der Benutzer über den Zustand des Kreismessers informiert werden und/oder darauf hingewiesen werden, dass das Kreismesser vorzugsweise in Bälde nachzuschleifen ist.

In den Rahmen der Erfindung fällt des Weiteren ein Verfahren zur Überwachung einer elektrisch betriebenen Scheibenschneidemaschine zum Abschneiden von Scheiben aus insbesondere strangförmigem Schneidgut, vorzugsweise Lebensmittel, gemäß der Erfindung mit einer Schneideeinrichtung, wobei die Schneideeinrichtung ein von einem elektrischen Messermotor angetriebenes, rotierendes Kreismesser umfasst, und mit einer Messerüberwachungseinrichtung zur Überwachung des Zustands des Kreismessers, wobei als Messdaten zur Eingabe in die Messerüberwachungseinrichtung der Messermotorstrom und/oder dessen zeitlicher Verlauf erfasst wird; und dass aus diesen Messdaten ein aktueller Schneidkennwert, insbesondere ein Verschmutzungskennwert und/oder ein Abnutzungskennwert und/oder ein Messerschärfekennwert, ermittelt wird.

Mit diesem Verfahren kann somit in besonders vorteilhafter Weise eine erfindungsgemäße Scheibenschneidemaschine betrieben werden. Der Messermotorstrom kann besonders leicht erfasst und ausgewertet werden. Dadurch können ein oder mehrere Schneidkennwerte ermittelt werden, die dann zur Sicherung einer optimalen Funktion der Scheibenschneidemaschine weiter genutzt werden können.

Auch kann vorgesehen sein, dass als Messdaten ein lastabhängiger Stromanteil und/oder ein lastunabhängiger Stromanteil des Messermotorstroms ermittelt werden.

Die lastabhängigen und die lastunabhängigen Stromanteile können dabei insbesondere dadurch identifiziert werden, dass sich diese in jeweils typischen Wertebereichen des Messermotorstroms bewegen. Insbesondere bewegen sich der lastunabhängige Stromanteil in einem sehr niedrigen Wertebereich und der lastabhängige Stromanteil in einem höheren Wertebereich.

Durch eine unabhängige Auswertung dieser Stromanteile lassen sich noch präziser Schneidkennwerte ableiten.

Dazu kann aus dem lastunabhängigen Stromanteil der Verschmutzungskennwert und/oder der Abnutzungskennwert und/oder aus dem lastabhängigen Stromanteil der Messerschärfekennwert abgeleitet werden. Dies ist möglich, da insbesondere der lastabhängige Stromanteil die Zeitphasen betrifft, in denen das Kreismesser entweder das Schneidgut schneidet, geschliffen oder entgratet wird.

Besonders vorteilhaft ist es, wenn der aktuelle lastunabhängige Anteil in vordefinierten Zeitintervallen, infolge vordefinierter Ereignisse, insbesondere infolge eines Einschaltens der Scheibenschneidemaschine, und/oder nach Erreichen einer vordefinierten, insbesondere periodischen, Schneideleistungsgrenze ermittelt wird.

Insbesondere kann zu Beginn jeder Inbetriebnahme der Scheibenschneidemaschine, zunächst der Leerlaufstrom des Messermotors gemessen und damit der aktuelle lastunabhängige Stromanteil ermittelt werden.

Dann kann auf besonders einfache Weise beispielsweise bei Inbetriebnahme der Scheibenschneidemaschine der Verschmutzungskennwert und/oder der Abnutzungskennwert ermittelt werden. Bei Bedarf kann dann ein Hinweissignal an den Benutzer ausgegeben werden, beispielsweise dass vor der weiteren Benutzung die Scheibenschneidemaschine zu warten, beispielsweise ein Riemen zu tauschen ist. Auch können diese Kennwerte als "Grundlasten" berücksichtigt werden, um den Zustand des Kreismessers noch präziser erfassen zu können.

Dazu kann auch vorgesehen sein, dass die Messdaten oder aus den Messdaten ermittelte Zwischenergebnisse, insbesondere ein Nettostrom des Messermotors, in einem nicht-flüchtigen Datenspeicher zwischengespeichert werden. Der Nettostrom kann beispielsweise als Differenz aus dem lastabhängigem und dem lastunabhängigen Stromanteil ermittelt werden. Er kann als Zwischenergebnis in dem nicht-flüchtigen Datenspeicher gespeichert werden.

Der nicht-flüchtige Datenspeicher kann beispielsweise ein Flash-Speicher sein.

In dem Datenspeicher können mehrere Zwischenergebnisse historisiert gespeichert werden. Somit kann ein Zeitverlauf, beispielsweise des Nettostroms, registriert und zu einem späteren Zeitpunkt ausgewertet werden. Dadurch kann beispielsweise auch ein besonders langsam fortschreitender Verschleiß identifiziert werden.

Besonders vorteilhaft ist insbesondere, wenn als Zwischenergebnis ein Integralwert, insbesondere beginnend ab Abschluss eines vorhergehend abgelaufenen Messerschleifprogramms, ermittelt wird. Dies bedeutet, dass ein Summationswert aus mehreren vorhergehenden Messwerten gebildet wird, der dann den Integralwert darstellt.

Hierdurch ergeben sich besondere Vorteile bei der Erfassung des Zustandes der Scheibenschneidemaschine bzw. des Kreismessers.

Durch die Summation bzw. Integration können Integralwerte gebildet werden, die besonders empfindlich den Zustand des Kreismessers indizieren können. Insbesondere kann dadurch besonders empfindlich zwischen einem beispielsweise scharfen und einem stumpfen bzw. zu schleifenden Kreismesser differenziert werden. Der jeweils aktuell gemessene Messermotorstrom wird durch zahlreiche unterschiedliche Parameter beeinflusst, beispielsweise durch Eigenschaften des Schneidguts, durch Abnutzungen als auch durch die eigentliche Schärfe des Kreismessers. Durch Integralwertbildung kann eine Mittelung erzielt werden, durch die Störeinflüsse weitgehend neutralisiert bzw. eliminiert werden können.

Da mit dem Abschluss eines vorhergehend abgelaufenen Messerschleifprogramms der Zustand des Kreismessers bekannt ist -das Kreismesser sollte scharf sein- kann durch Beginn der Integration mit Abschluss dieses Messerschleifprogramms besonders einfach die fortschreitende Abnutzung des Kreismessers verfolgt werden und zumindest näherungsweise sogar ein Absolutwert für die Schärfe bzw. Güte des Kreismessers ermittelt werden.

Denkbar ist auch, dass mit einem Messdatum und/oder mit einem Zwischenergebnis ein Soll-/Ist-Vergleich zu einem vordefinierten Grenzwert G₁ und/oder zu einem dynamisch ermittelten Grenzwert G₂ erfolgt. Durch einen Soll-/Ist-Vergleich kann beispielsweise auf besonders einfache Weise bedarfsgerecht eine Wartungsmaßnahme, insbesondere ein Messerschleifprogramm, gestartet werden. Dazu kann der Grenzwert entweder fest vordefiniert sein. Alternativ und/oder ergänzend kann der Grenzwert auch dynamisch ermittelt werden. Beispielsweise kann der Grenzwert als Differenz aus einem vorgegebenen Wert und einem aktuell gemessenen Wert, beispielsweise dem Verschmutzungskennwert, gebildet werden.

Weiter kann auch ein Hinweissignal über eine Signalausgabeeinheit, insbesondere eine Display- und/oder eine Akustikausgabeeinheit, ausgegeben werden, wenn der Wert des Schneidkennwerts den vordefinierten Grenzwert G₁ und/oder den dynamisch ermittelten Grenzwert G₂ erreicht und/oder über- oder unterschreitet.
Dann kann beispielsweise ein Benutzer informiert werden und/oder angehalten werden, einen Wartungsvorgang, insbesondere das Messerschleifprogramm, zu starten.

Es kann auch vorgesehen sein, dass ein Messerschleifprogramm zur Schärfung des Kreismessers automatisch gestartet wird, wenn der Wert des Schneidkennwerts den vordefinierten Grenzwert G₁ und/oder den dynamisch ermittelten Grenzwert G₂ erreicht und/oder über- oder unterschreitet. Dann bedarf es keiner weiteren Aktion des Benutzers, um das Messerschleifprogramm zu starten, wodurch die Scheibenschneidemaschine noch bedienfreundlicher wird.

Auch kann vorgesehen sein, dass ein Betrieb der Scheibenschneidemaschine im Messerschleifprogramm mittels des Messermotorstroms und/oder dessen zeitlichen Verlaufs detektiert, überwacht, insbesondere dessen Zeitdauer gemessen, und/oder gesteuert, insbesondere beendet, wird. Dadurch kann nicht nur erkannt werden, ob ein Kreismesser zu schleifen ist oder nicht, sondern es kann beispielsweise auch überwacht werden, ob der Schleifvorgang ordnungsgemäß verläuft und/oder ob das Kreismesser hinreichend nachgeschliffen wird bzw. worden ist.

Alternativ oder ergänzend kann auch eine Information über den Zustand des Kreismessers nach dem Schleifvorgang abgeleitet werden, so dass diese Information beispielsweise während einer nachfolgenden Benutzung der Scheibenschneidemaschine zum Schneiden von Schneidgut berücksichtigt werden kann und somit die Abnutzung des Kreismessers noch präziser überwacht werden kann.

Erfahrungsgemäß muss das Kreismesser ersetzt werden, sobald der Durchmesser des Kreismessers, bedingt insbesondere durch wiederholte Nachschleifvorgänge, einen vordefinierten Mindestwert, beispielsweise mindestens 10 mm kleiner als der Durchmesser eines neuen Kreismessers, unterschreitet. Ein entsprechender Schneidkennwert, der in der Lage ist, den Zeitpunkt zu indizieren, zu dem das Kreismesser ersetzt werden sollte, kann ebenfalls auf besonders einfache Weise gewonnen werden. Dazu kann insbesondere die Gesamtdauer aller Schleifvorgänge des jeweiligen Kreismessers aufsummiert bzw. gebildet werden und diese mit einer vordefinierten maximalen zulässigen Schleifstandzeit verglichen werden. Wird die maximal zulässige Schleifstandzeit überschritten, so ist das Kreismesser zu wechseln.

Vorteilhaft ist es auch, wenn ein Entgratungsvorgang des Kreismessers anhand des Messermotorstroms und/oder dessen zeitlichen Verlaufs detektiert, überwacht, insbesondere dessen Zeitdauer gemessen, gesteuert, insbesondere beendet, wird und/oder auf der Signalausgabeeinheit ein Entgratungs-Hinweissignal ausgegeben wird, das auf einen ausstehenden und/oder einen erfolgten Entgratungsvorgang hinweist. Dies ist möglich, da auch während eines Entgratungsvorgangs insbesondere charakteristische Zeitverläufe des Messermotorstroms zu erwarten sind. Diese können mittels Messung des Messermotorstroms detektiert werden und somit ein Entgratungsvorgang detektiert werden. Beispielsweise kann somit festgestellt werden, ob das Kreismesser nach dem Schleifen überhaupt entgratet worden ist. Bei Bedarf kann dann ein entsprechendes Hinweissignal, insbesondere ein Warnsignal, an den Benutzer über die Signalausgabeeinheit ausgegeben werden. Aus dem Wert des gemessenen Messermotorstroms und/oder seines zeitlichen Verlaufs kann zudem auf den Zustand einer zur Entgratung verwendeten Entgratungsvorrichtung geschlossen werden. Damit kann beispielsweise ermittelt werden, ob und/oder inwieweit eine Messerschleifvorrichtung, insbesondere deren Schleifscheibe oder Entgratungsscheibe bereits abgenutzt ist bzw. Wartungsbedarf aufweist. Aus dem Messermotorstrom kann ebenfalls abgeleitet werden, ob die Schleifscheibe oder Entgratungsscheibe korrekt oder inkorrekt eingestellt ist, zum Beispiel mit Bezug auf den Anstellwinkel der Schleifscheibe oder Entgratungsscheibe. Außerdem kann erkannt werden, falls eine nicht zur Schneidemaschine zugehörige Messerschleifvorrichtung benutzt wird, wenn sie von der charakteristischen Messermotorstromaufnahme abweicht.

Weitere Merkmale und Vorteile der Erfindung ergeben sich aus der nachfolgenden detaillierten Beschreibung eines Ausführungsbeispiels der Erfindung anhand der Figuren der Zeichnung, die erfindungswesentliche Einzelheiten zeigen, sowie aus den Ansprüchen. Die einzelnen Merkmale können je einzeln für sich oder zu mehreren in beliebigen Kombinationen bei Varianten der Erfindung verwirklicht sein. In der schematischen Zeichnung sind Ausführungsbeispiele der Erfindung dargestellt, welche in der nachfolgenden Beschreibung näher erläutert werden.

Es zeigen:
- Fig. 1: eine Scheibenschneidemaschine;
- Fig. 1a: eine schematisierte Darstellung der Scheibenschneidemaschine der Fig. 1;
- Fig.2a bis 2d: schematisierte Darstellungen der langfristigen Verläufe der Stromaufnahme einer Scheibenschneidemaschine;
- Fig. 3: eine schematisierte Darstellung des kurzfristigen Verlaufs der Stromaufnahme einer Scheibenschneidemaschine beim Schneiden von Scheiben;
- Fig. 4: eine schematisierte Darstellung des kurzfristigen Verlaufs der Stromaufnahme einer Scheibenschneidemaschine während eines Schleif- und Entgratungsvorganges und
- Fig. 5: ein Verlaufsdiagramm für das erfindungsgemäße Verfahren.

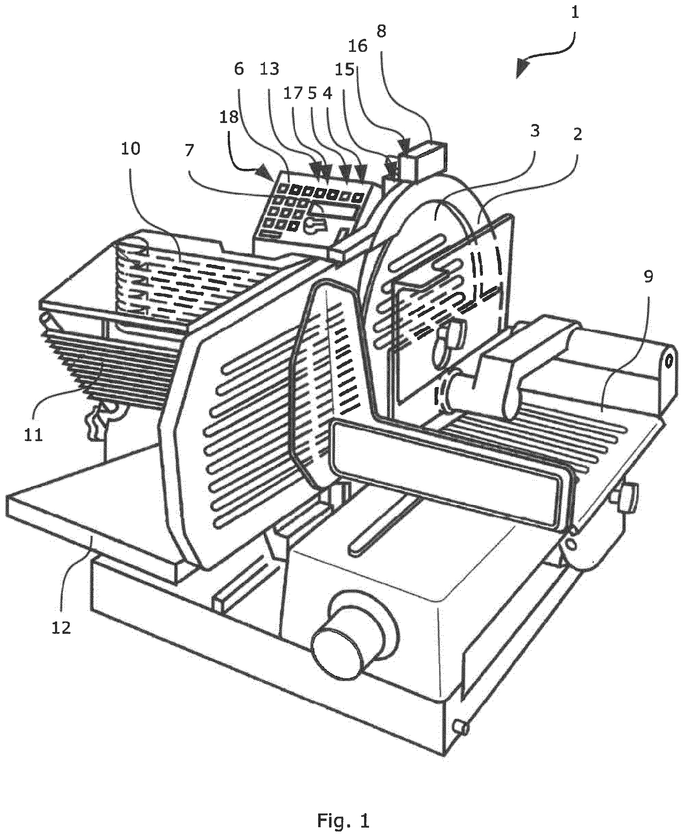

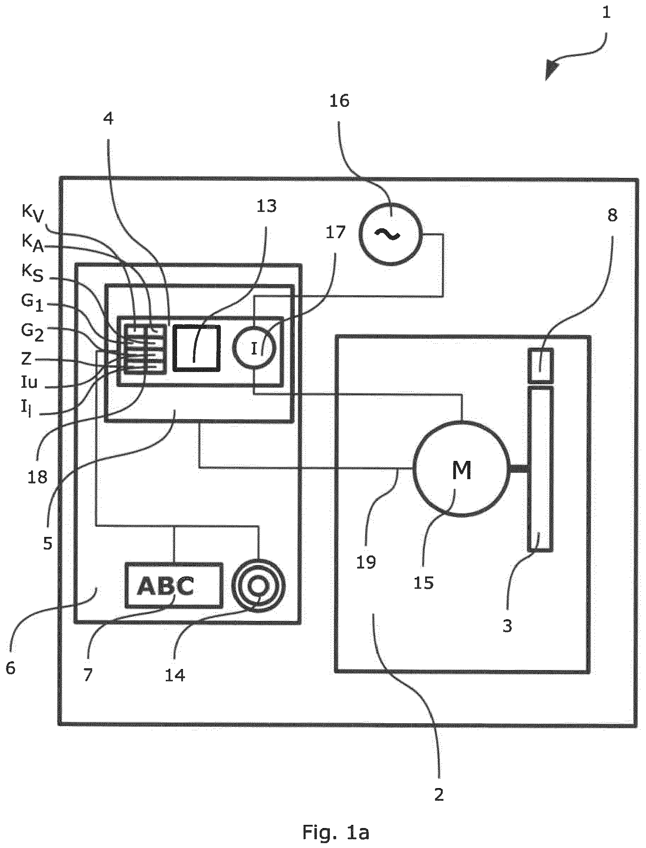

Die **Fig. 1** zeigt eine perspektivische Darstellung und die **Fig. 1a** zeigt eine stark schematisierte Darstellung einer elektrisch betriebenen **Scheibenschneidemaschine 1** zum Abschneiden von Scheiben aus insbesondere strangförmigem Schneidgut, vorzugsweise Lebensmittel, mit einer **Schneideeinrichtung 2**, wobei die Schneideeinrichtung 2 ein von einem **elektrischen Messermotor 15** angetriebenes, rotierendes **Kreismesser 3** umfasst. Die Scheibenschneidemaschine 1 weist eine **Messerüberwachungseinrichtung 4** zur Überwachung des Zustands des Kreismessers 3 auf. Die Messerüberwachungseinrichtung 4 ist in eine **Steuereinheit 5** integriert, die wiederum in einer **Signalausgabeeinheit 6** integriert angeordnet ist.

Die Messerüberwachungseinrichtung 4 ist elektrisch mit dem Messermotor 15 verbunden. Insbesondere weist die Messerüberwachungseinrichtung 4 eine **Strommessvorrichtung 17** zur Messung des Messermotorstroms auf, mit der der durch den Messermotor 15 fließende Strom gemessen werden kann. Dazu ist die Strommessvorrichtung 17 zwischen eine **Motorstromversorgung 16** und den Messermotor 15 geschaltet. Auch weist die Messerüberwachungseinrichtung 4 und somit auch die Steuereinheit 5 einen **nicht-flüchtigen Datenspeicher 18** auf. Wie in der Fig. 1a zu erkennen weist der nicht-flüchtige Datenspeicher eine Vielzahl von Speicherbereichen auf, insbesondere zur Speicherung eines **Verschmutzungskennwerts Kᵥ,** eines **Abnutzungskennwertes K_{A},** eines **Messerschärfekennwertes Kₛ, Grenzwerten G₁, G₂,** mindestens eines **Zwischenergebnisses Z sowie eines lastunabhängigen Stromanteils Iᵤ und eines lastabhängigen Stromanteils Iₗ.**

Die Steuereinheit 5 ist als Rechnereinheit ausgebildet, auf der eine Computerprogrammkomponente in einer Speichereinheit der Rechnereinheit ausführbar abgelegt ist. Die Computerprogrammkomponente ist dabei eingerichtet, das im Folgenden noch näher zu beschreibende erfindungsgemäße Verfahren zu steuern bzw. umzusetzen. Die Steuereinheit 5 ist dazu zur Steuerung des Messermotors 15 über eine **Steuerleitung 19** (Fig. 1a) mit diesem verbunden.

Die Signalausgabeeinheit 6 umfasst eine **Displayeinheit 7** und eine **Akustikausgabeeinheit 14**, auf welcher für einen Benutzer der Scheibenschneidemaschine 1 Hinweissignale ausgegeben werden können.

In den Fig. 1 und Fig. 1a ist auch eine **Schleifvorrichtung 8** zu erkennen. Die Schleifvorrichtung 8 ist in diesem Ausführungsbeispiel auf die Scheibenschneidemaschine 1 aufsetzbar und abnehmbar. Sie dient zum bedarfsweisen Schleifen des Kreismessers 3.

Des Weiteren weist die Scheibenschneidemaschine 1 eine **Schleifüberwachungsvorrichtung 13** auf. Die Schleifüberwachungsvorrichtung 13 ist insbesondere in die Messerüberwachungseinrichtung 4 und somit auch in die Steuereinheit 5 integriert. Die Schleifüberwachungsvorrichtung 13 dient dazu, einen mittels der Schleifvorrichtung 8 durchgeführten Schleifvorgang zu detektieren bzw. zu erkennen und gegebenenfalls zu überwachen und zu steuern.

Auf einem in Fig. 1 gezeigten **Schlitten 9** kann Schneidgut abgelegt und dem Kreismesser 3 zum Schneiden von Scheiben zugeführt werden. Dazu ist der Schlitten 9 parallel zum Kreismesser 3 verfahrbar an der Scheibenschneidemaschine 1 angeordnet.

Abgeschnittene Scheiben werden in der in Fig. 1 dargestellten Scheibenschneidemaschine 1 mittels eines **Kettenrahmens 10** und einem **Abschläger 11** auf einem **Ablagetisch 12** abgelegt.

Im Folgenden soll nun näher erläutert werden, wie die Steuereinheit 5 anhand des mittels der Strommessvorrichtung 17 gemessenen

Messermotorstroms den Zustand des Kreismessers 3 überwacht und bei Bedarf einen Schleifvorgang einleitet.

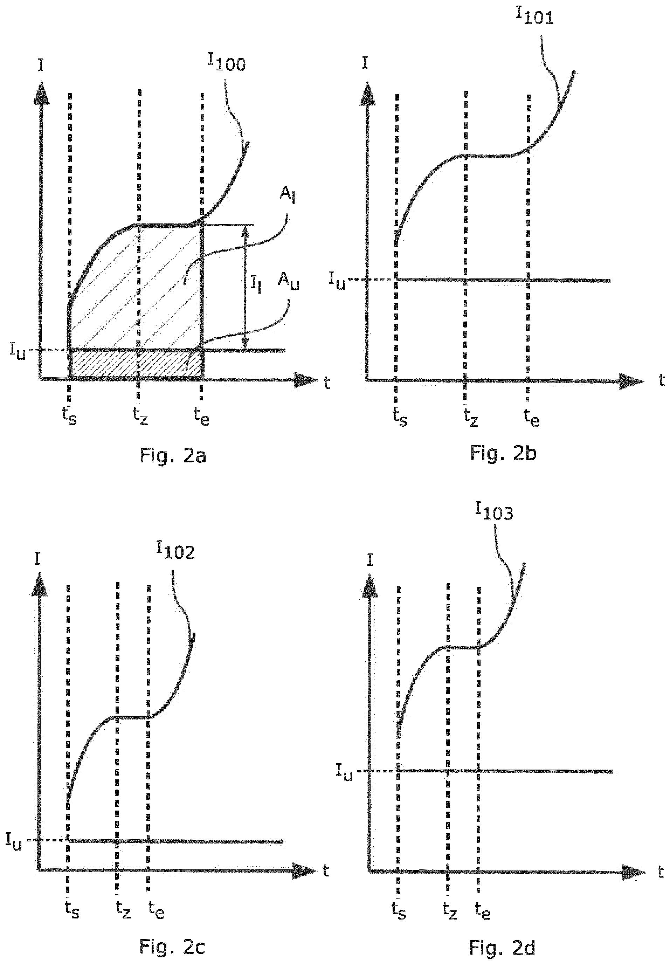

Dazu zeigen die **Fign. 2a bis Fig. 2d** schematisierte Darstellungen der langfristigen Verläufe der Stromaufnahme einer erfindungsgemäßen Scheibenschneidemaschine als Strom (I)-Zeit (t)-Diagramme. Den Darstellungen liegt aus Gründen eines einfacheren Verständnisses der Erfindung jeweils die Annahme zugrunde, dass eine annähernd gleiche Schneidemenge je Zeiteinheit geschnitten wird, z. B. eine gleiche Anzahl von Scheiben eines Schneidguts mit jeweils gleicher Beschaffenheit. Es versteht sich jedoch für den Fachmann, dass die Erfindung nicht auf diesen Spezialfall beschränkt ist, sondern ohne weitergehende Änderungen auch allgemein nutzbar ist.

Insbesondere sind die zeitlichen, langfristigen Verläufe von **Messermotorströmen I₁₀₀, I₁₀₁, I₁₀₂, I₁₀₃** beim Betrieb der erfindungsgemäßen Scheibenschneidemaschine 1 der Fig. 1 zu erkennen.

Die Strom-Zeit-Diagramme der Fig. 2a bis Fig. 2d beginnen jeweils bei einem **Startzeitpunkt tₛ,** an dem das Kreismesser 3 (Fig. 1) jeweils frisch geschliffen und entgratet ist.

Bis zu einem **Endzeitpunkt tₑ** können Scheiben mit dem Kreismesser 3 geschnitten werden. Nach dem Zeitpunkt **tₑ** ist das Kreismesser 3 soweit abgenutzt, dass es erneut zu schleifen und zu entgraten ist.

Dazwischen befindet sich ein **Zwischenzeitpunkt t_{z}**, bis zu dem der Zustand des Kreismessers 3 als ideal angesehen werden kann, wohingegen danach der Zustand bis zum Zeitpunkt tₑ als für einen Normalbetrieb zumindest geeignet eingestuft werden kann.

Zu erkennen ist in allen Diagrammen der Fign. 2a bis 2d, dass die Messermotorströme I₁₀₀, **I**₁₀₁**,** I₁₀₂, I₁₀₃ zumindest näherungsweise stetig ansteigen. Mit anderen Worten steigt die Leistungsaufnahme der Messermotoren näherungsweise kontinuierlich an.

In den Fign. 2a bis Fig. 2d sind weiter Grundlasten bzw. **last-unabhängige Stromanteile Iᵤ** gekennzeichnet. Diese entsprechen den jeweiligen Leerlaufströmen der Scheibenschneidemaschine 1. Zu erkennen ist, dass die lastunabhängigen Stromanteile Iᵤ im Wesentlichen zeitlich konstant ausfallen. Sie lassen sich unter anderem zurückführen auf durch Riemen, Lager und dergleichen verursachte Reibung sowie auf Reibung, die beispielsweise durch Verschmutzungen, insbesondere Fettablagerungen, der Scheibenschneidemaschine entsteht. Die als konstant dargestellten lastunabhängigen Stromanteile Iᵤ dienen der vereinfachten Darstellung und leichteren Verständlichkeit. Während in der Realität der Stromanteil Iᵤ, der durch Reibung von Riemen, Lagern und dergleichen verursacht wird, sehr langsam ansteigt, steigt der lastunabhängige Stromanteil Iᵤ, der durch Verschmutzung verursacht wird, deutlich schneller an.

Ein **lastabhängiger Stromanteil Iₗ** (siehe Fig. 2a) lässt sich somit zu jedem Zeitpunkt als Differenz aus dem Messermotorstrom I₁₀₀ sowie entsprechend auch für die Messermotorströme I₁₀₁, I₁₀₂, I₁₀₃ und dem jeweiligen lastunabhängigen Stromanteil I_{U} ermitteln.

Der Fig. 2a sind ferner noch zwei **Flächen Aᵤ und Aₗ** als Teilflächen unter den Kurven des Messermotorstroms I₁₀₀ bzw. des lastunabhängigen Stromanteils Iᵤ und des lastabhängigen Stromanteils Iₗ, jeweils gerechnet ab dem Startzeitpunkt tₛ, zu entnehmen.

Die Flächen Aᵤ und Aₗ zusammen entsprechen somit den ab dem Startzeitpunkt tₛ aufsummierten Einzelwerten bzw. dem Integralwert des Messermotorstroms I₁₀₀. Die Fläche Aₗ entspricht den aufsummierten Einzelwerten bzw. dem Integralwerts des lastabhängigen Stromanteils Iₗ. Die Fläche Aᵤ entspricht den aufsummierten Einzelwerten bzw. dem Integralwert des lastunabhängigen Stromanteils Iᵤ. Die Fläche Aₗ verhält sich im Wesentlichen proportional zum Messerschärfekennwert Kₛ. Die Fläche Aᵤ verhält sich im Wesentlichen proportional zum Verschmutzungskennwert K_{V} und/oder dem Abnutzungskennwert K_{A}.

Es hat sich gezeigt, dass eine besonders zuverlässige Ermittlung des Messerschärfekennwerts K_{S}, des Verschmutzungskennwerts K_{V} und/oder des Abnutzungskennwerts K_{A} durch Auswertung dieser Integralwerte bzw. der Flächen Aₗ und Aᵤ ermöglicht wird, da sich auf diese etwaige, gegebenenfalls kurzzeitige, Störeinflüsse nur in reduziertem Maße auswirken können und Unterschiede zwischen den verschiedenen Zuständen des Kreismessers 3 bzw. der Scheibenschneidemaschine 1 wesentlich deutlicher hervortreten.

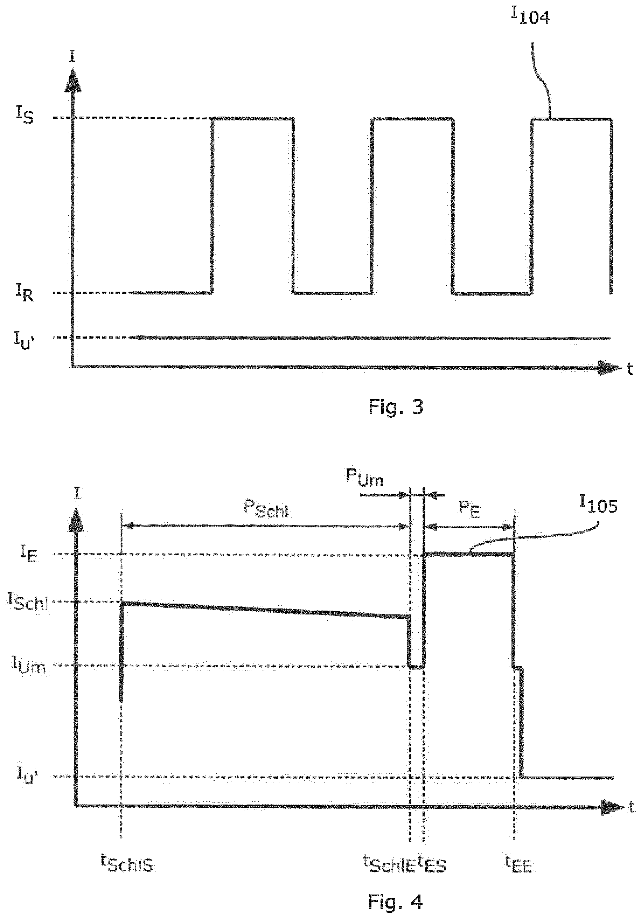

Anzumerken ist, dass die zeitlichen Verläufe der Messermotorströme I₁₀₀, I₁₀₁, I₁₀₂, I₁₀₃ vereinfacht dargestellt sind. Der tatsächliche Verlauf hängt unter anderem vom Schneidgut, insbesondere von dessen Beschaffenheit und geometrischen Dimensionen, vom Kreismesser 3 der Scheibenschneidemaschine 1 selbst und von weiteren Parametern ab. Insofern sind die Messermotorströme I₁₀₀, I₁₀₁, I₁₀₂, I₁₀₃ stellvertretend abgebildet für Kurvenscharen individuell unterschiedlicher Stromverläufe, die sich aus diesen unterschiedlichen Einflussfaktoren ergeben. Auch zeigen die Fig. 2a bis Fig. 2d nicht den zeitlichen Detailverlauf der Messermotorströme I₁₀₀, I₁₀₁, I₁₀₂, I₁₀₃, insbesondere sind Schwankungen während des Schneidens einzelner Scheiben, wie in Fig. 3 dargestellt, hier der Übersichtlichkeit halber nicht wiedergegeben.

Ferner zeigen die Fign. 2a bis Fig. 2d vier verschiedene Konstellationen von zeitlichen Verläufen der Messermotorströme I₁₀₀, I₁₀₁, I₁₀₂, I₁₀₃ bei stark gestauchtem Zeitmaßstab.

Fig. 2a veranschaulicht den Fall, dass weiches Schneidgut bei einer geringen Grundlast bzw. einem geringen lastunabhängigen Stromanteil Iᵤ geschnitten wird. Dabei entspricht ein geringer lastunabhängiger Stromanteil Iᵤ beispielsweise dem Fall einer frisch gewarteten und gereinigten Scheibenschneidemaschine 1.

Fig. 2b gibt den Fall wieder, dass weiches Schneidgut bei einer hohen Grundlast bzw. einem hohen lastunabhängigen Stromanteil Iᵤ geschnitten wird.

Fig. 2c zeigt den Fall, dass hartes Schneidgut bei einer geringen Grundlast bzw. einem geringen lastunabhängigen Stromanteil Iᵤ geschnitten wird.

Fig. 2d schließlich betrifft den Fall, dass hartes Schneidgut bei einer hohen Grundlast bzw. einem hohen lastunabhängigen Stromanteil Iᵤ geschnitten wird.

Aus dem Vergleich der Figuren 2a bis Fig. 2d ist erkennbar, dass mit steigender Härte des Schneidgutes die Verläufe der Messermotorströme I₁₀₀, I₁₀₁, I₁₀₂, I₁₀₃ zeitlich komprimiert werden, was dementsprechend auf eine beschleunigte Abnutzung des Kreismessers 3 hindeutet.

Eine steigende Grundlast bzw. ein steigender lastunabhängiger Stromanteil Iᵤ führt dagegen näherungsweise zu einer Parallelverschiebung der Verläufe der Messermotorströme I₁₀₀, I₁₀₁, I₁₀₂, I₁₀₃. Hiermit geht eine - von der Abnutzung des Kreismessers unabhängige - erhöhte Reibung einher.

**Fig. 3** stellt einen **Messermotorstrom I₁₀₄** der Scheibenschneidemaschine 1 (Fig. 1) während des Schneidens einzelner Scheiben eines Schneidguts dar.

Der Messermotorstrom I₁₀₄ schwankt dabei im Wesentlichen zwischen zwei Stromwerten: Während des Schneidens einer Scheibe entspricht der Messermotorstrom I₁₀₄ einem **Schneidstrom Iₛ.** Zwischen dem Schneiden zweier Scheiben, d. h. wenn der Schlitten 9 (Fig. 1) der Scheibenschneidemaschine 1 zurückgeschoben wird, entspricht der Messermotorstrom I₁₀₄ dagegen einem wesentlich geringeren **Rückschubstrom I_{R}.** Der Rückschubstrom I_{R} ist dabei etwas stärker als ein Leerlaufstrom bzw. ein **lastunabhängiger Strom I_{u'}**.

Somit lässt sich aus dem Messermotorstrom I₁₀₄ insbesondere ableiten, ob und gegebenenfalls wie lange eine Scheibe geschnitten wird, ob der Schlitten 9 zurückgeschoben wird oder ob sich die Scheibenschneidemaschine 1 vollständig im Leerlauf befindet. Aus dem Messermotorstrom I₁₀₄ kann somit auch auf die Anzahl der geschnittenen Scheiben zurückgeschlossen werden, wobei jedes lokale Maximum des Messermotorstroms I₁₀₄ in Fig. 3 einer geschnittenen Scheibe entspricht.

Die Darstellung ist dabei zur Vereinfachung des Verständnisses vereinfacht. Im Detail zeigt sich, dass während eines Schneidvorgangs die Leistungsaufnahme ansteigt, bis das Kreismesser 3 (Fig. 1) an der dicksten Stelle des Schneidguts angelangt ist und fällt danach wiederum bis zum Austritt des Kreismessers 3 wiederum ab, da üblicherweise sowohl das Schneidgut, beispielsweise Wurst, als auch das Kreismesser 3 kreisförmig sind und somit je nach Position des Kreismessers 3 mehr oder weniger Schneidgut durchschnitten wird. Die stärkste Reibung bzw. Bremswirkung und somit die höchste Leistungsaufnahme während des Schneidvorgangs sind somit in der Regel in einer mittleren Position zu erwarten, bei der die Überlappung von Kreismesser 3 und Schneidgut am größten ist. Jedoch ist dieser durch diese Überlappung bewirkte Effekt deutlich geringer als die durch den Schneidvorgang an sich bewirkte Erhöhung der Leistungsaufnahme des Messermotors 15 (Fig. 1a). Auch hängt die Effektstärke vom Schneidgut ab. So ist diese beispielsweise von der Festigkeit des Schneidguts abhängig. Ein deutlicher Effekt ergibt sich beispielsweise bei weicher Wurst oder Käse, wohingegen bei, vergleichsweise harter, wenig klebriger, Salami oder Schinken der Effekt nur gering ausgeprägt ist.

**Fig. 4** zeigt nun den Verlauf eines **Messermotorstroms I₁₀₅** während eines Schleif- und Entgratungsvorgangs des Kreismessers 3 (Fig. 1). Der gewählte Zeitmaßstab ist dabei gegenüber der Fig. 3 deutlich komprimiert und aus Darstellungsgründen nicht maßstäblich abgebildet.

Zu erkennen sind insbesondere drei verschiedene Phasen: eine erste **Schleifphase P_{Schl}** zwischen einem **Schleifstartzeitpunkt t_{SchlS}** und einem **Schleifendzeitpunkt t_{SchlE},** während der der eigentliche Schleifvorgang stattfindet. Daran schließt sich eine **Umschaltphase P_{Um}** an, während der von dem Schleifvorgang auf den Entgratungsvorgang umgeschaltet wird. Ab einem **Entgratungsstartzeitpunkt t_{ES}** wird das Kreismesser während einer **Entgratungsphase P_{E}** bis zu einem **Entgratungsendzeitpunkt t_{EE}** entgratet bzw. abgezogen.

Üblicherweise dauert die Schleifphase **P_{Schl}** wesentlich länger, beispielsweise mindestens zehnmal und insbesondere etwa zwanzigmal so lange, insbesondere ca. 20 Sekunden, wie das Schneiden einer Scheibe.

Das bedeutet, dass während der Schleifphase **P_{Schl}** ununterbrochen eine hohe Stromaufnahme in Höhe eines **Schleifstroms I_{Schl}** erfolgt. Der Schleifstrom **I_{Schl}** ist näherungsweise konstant, sinkt jedoch bei Detailbetrachtung über den Schleifvorgang hinweg geringfügig, insbesondere im Bereich von 2 bis 5 %, ab. Das liegt daran, dass das Messer sich mehr und mehr an die Form eines Schleifsteins der Messerschleifvorrichtung 8 (Fig. 1) anpasst.

Die Umschaltphase Pum dauert dahingegen wesentlich kürzer als die Schleifphase P_{Schl}, insbesondere ca. 6 Sekunden. Während dieser wird von dem Schleifstein auf einen Abziehstein der Messerschleifvorrichtung 8 umgeschaltet. Während dessen erfolgt eine Stromaufnahme in Höhe eines **Umschaltstroms I_{Um},** der deutlich geringer als der Schleifstrom **I_{Schl}** ist.

Die Entgratungsphase P_{E} dauert dagegen in etwa 1-2 Sekunden. Während dieser erfolgt eine Stromaufnahme in Höhe eines **Entgratungsstromes I_{E},** der wesentlich stärker als der Schleifstrom I_{Schl} ist. Der Schleifstein ist gröber als der Abziehstein. Das erklärt, warum das Entgraten bzw. Abziehen mehr Leistung benötigt als das Schleifen.

Das Schleifen weist einen bestimmten, vordefinierten Leistungskorridor auf. Bewegt sich die Stromaufnahme während des Schleifvorgangs unterhalb dieses Leistungskorridors, d. h. wird deutlich zu wenig, jedoch über einen längeren Zeitraum hinweg, Leistung abgerufen, heißt das, dass der Schleifstein zum Beispiel durch Fett verschmiert ist und deswegen nicht richtig schleift und ausgetauscht werden muss. In diesem Fall wird mittels der Steuereinheit 5 (Fig. 1) und insbesondere der Schleifüberwachungsvorrichtung 13 (Fig. 1) über die Signalausgabeeinheit 6 (Fig. 1) ein entsprechendes Hinweissignal ausgegeben, dass der Schleifstein zu wechseln ist.

Infolge von Abnutzung, beispielsweise Abrieb, fällt die Leistungsaufnahme während des Schleifvorgangs dagegen langsam innerhalb des Leistungskorridors ab. Analog wird dann bei Überschreiten eines vordefinierten Abnutzungsgrades ein Hinweissignal an den Benutzer ausgegeben.

Ist die Leistungsaufnahme während des Schleifvorgangs nicht im Leistungskorridor, ist entweder eine ungeeignete Messerschleifvorrichtung 8 in Verwendung oder diese ist nicht ordnungsgemäß montiert und/oder eingestellt. In diesem Fall wird ein Hinweissignal an den Benutzer ausgegeben, dass die Messerschleifvorrichtung 8 zu prüfen ist.

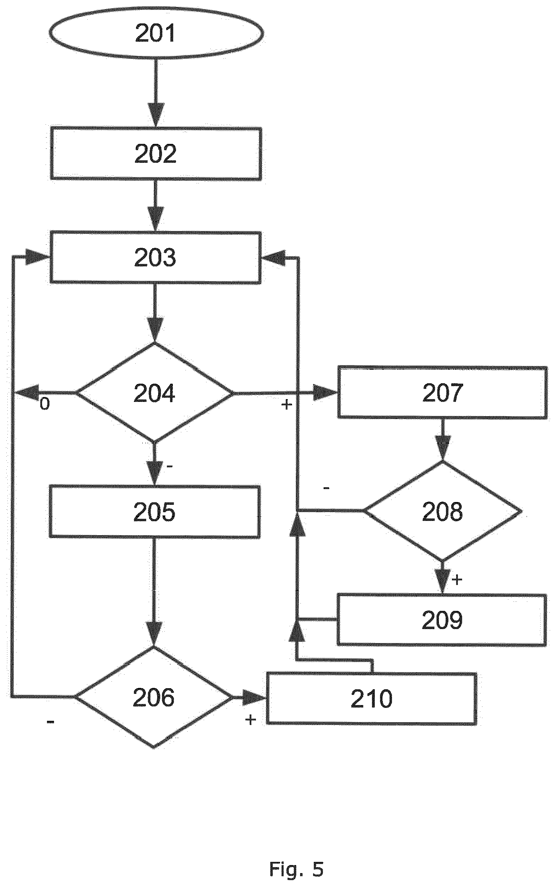

Anhand des Verlaufsdiagramms in Fig. 5 soll nun das erfindungsgemäße Verfahren näher erläutert werden:
Die im Folgenden dargestellten Verfahrensschritte sind in einer Computerprogrammkomponente der Steuereinheit 5 implementiert und werden bei Abarbeitung dieser Computerprogrammkomponente stufenweise ausgeführt.

Das erfindungsgemäße Verfahren beginnt mit Start des Messermotors 15 (Fig. 1a) entsprechend **Schritt 201**.

In **Schritt 202** wird nach Ablauf einer vordefinierten Wartezeit von wenigen Sekunden der Messermotorstrom gemessen und als aktueller lastunabhängiger Stromanteil Iᵤ in dem nicht-flüchtigen Datenspeicher 18 (Fig. 1a) zwischengespeichert, sofern der gemessene Messermotorstrom in einem für den lastunabhängigen Stromanteil Iᵤ vordefinierten Bereich zulässiger Werte liegt. Liegt der gemessene Motorstrom nicht im vordefinierten Bereich für den lastunabhängigen Stromanteil Iᵤ, zum Beispiel weil das Schneidgut schon das Kreismesser 3 (Fig. 1) berührt bevor die Messung des Messermotorstroms abgeschlossen ist, wird ein zuletzt verwendeter, in dem nicht-flüchtigen Datenspeicher 18 zuvor abgelegter Wert für den lastunabhängigen Stromanteil Iᵤ beibehalten oder - sofern auch dieser aufgrund erstmaliger Verwendung der Scheibenschneidemaschine 1 (Fig. 1) noch nicht existiert - ein vordefinierter Standardwert als lastunabhängiger Stromanteil verwendet und in dem nicht-flüchtigen Datenspeicher 18 zwischengespeichert. Zwischen **Schritt 203** und **Schritt 206** findet eine kontinuierliche Überwachung des Messermotorstroms statt.

Dazu wird zunächst in Schritt 203 der Messermotorstrom gemessen und der Zeitpunkt der Messung zwischengespeichert.

In einem **Schritt 204** wird anschließend geprüft, ob eine Scheibe geschnitten wird (in Fig. 5 mit dem Symbol "-" markiert) oder ob das Kreismesser 3 geschliffen wird (in Fig. 5 mit dem Symbol "+" markiert). Letzteres wird angenommen, wenn der gemessene Messermotorstrom einen vordefinierten Schleifstromgrenzwert während einer ein Vielfaches einer üblichen Dauer eines Schneidvorganges längeren Zeitdauer überschreitet und während dieser Zeitdauer annähernd konstant ist. In diesem Fall wird das Verfahren mit einem **Schritt 207** fortgesetzt.

Wird eine Scheibe geschnitten, d. h. bewegt sich der gemessene Messermotorstrom über dem Wert des lastunabhängigen Stromanteils Iᵤ und spiegelt der gemessene Messermotorstrom einen oder mehrere Schleifvorgänge wieder, das heißt der gemessene Messermotorstrom weist entsprechend der Fig. 3 lokale Maxima, wenn eine Scheibe geschnitten wird, und lokale Minima, wenn der Schlitten zurückgezogen wird, mit jeweils vordefinierten Zeitdauern, insbesondere Höchstzeitdauern, auf, so wird gefolgert, dass Scheiben geschnitten werden und das Verfahren mit einem **Schritt 205** fortzusetzen ist. Ein Schneidvorgang wird so auch erkannt, selbst wenn der gemessene Messermotorstrom beim Schneiden über dem Schleifstromgrenzwert liegt.

In dem Fall, dass weder eine Scheibe geschnitten wird noch das Kreismesser geschliffen wird (in Fig. 5 mit dem Symbol "0" markiert), wird das Verfahren mit Schritt 203 fortgesetzt. Mit anderen Worten wird solange gewartet, bis entweder eine Scheibe geschnitten wird oder das Kreismesser 3 geschliffen wird. In diesem Verfahrensschritt kann der gemessen Messermotorstrom zur Bestimmung des aktuellen lastunabhängigen Stromanteils Iᵤ genutzt werden und im nicht-flüchtigen Datenspeicher zwischengespeichert werden. So wird der lastunabhängige Stromanteil Iᵤ zu einem Zeitpunkt, in dem nicht geschnitten wird, neu bestimmt. Dies ist insbesondere deshalb besonders vorteilhaft, da sich im Verlauf der Nutzung der Schneidemaschine der lastunabhängige Stromanteil Iᵤ aufgrund zunehmender Verschmutzung der Schneidemaschine ändern kann.

In Schritt 205, d. h. wenn eine Scheibe geschnitten wird, wird zunächst ein Nettostrom ermittelt, indem von dem gemessenen Messermotorstrom der im nicht-flüchtigen Datenspeicher abgelegte aktuelle Wert des lastunabhängigen Stromanteils abgezogen wird.

Anschließend wird ein ebenfalls im nicht-flüchtigen Datenspeicher abgelegter Integralwert, um den Nettostrom multipliziert mit der Zeitdauer zwischen den beiden letzten Messermotorstrom-Messungen gemäß Schritt 203, erhöht. Sofern noch kein Integralwert im nicht-flüchtigen Datenspeicher abgelegt ist, wird dazu für den ursprünglichen Integralwert der Wert Null angenommen. Der neue Integralwert wird wieder im nicht-flüchtigen Datenspeicher abgelegt.

In **Schritt 206** wird anschließend geprüft, ob der Integralwert einen vordefinierten Grenzwert G₁ überschreitet und somit das Kreismesser 3 nachzuschleifen ist.

Ist dies der Fall (in Fig. 5 mit dem Symbol "+" markiert), wird zu einem **Schritt 210** weiter verzweigt, anderenfalls wird das Verfahren mit einem Schritt 203 fortgesetzt.

Ist das Kreismesser 3 nachzuschleifen, so wird in Schritt 210 auf der Signalausgabeeinheit 6 der Scheibenschneidemaschine 1 ein Hinweissignal erzeugt, dass einem Benutzer der Scheibenschneidemaschine 1 empfiehlt, das Kreismesser 3 zu schleifen. Anschließend kehrt das Verfahren wieder zu Schritt 203 zurück. Der Benutzer kann dann die Messerschleifvorrichtung 8 (Fig. 1) installieren und den Schleifvorgang starten.

In den Schritten 207, **208 und 209** erfolgt dann die Überwachung des Schleifvorgangs.

Dazu wird zunächst in Schritt 207 die Dauer des Schleifvorgangs ermittelt. Überschreitet diese Dauer eine vordefinierte Mindestdauer, so wird der Integralwert auf den Wert Null zurückgesetzt. Wird die Mindestdauer dagegen nicht erreicht, d. h. ist das Kreismesser 3 nicht hinreichend lang geschliffen worden, so wird der Integralwert nur anteilig, beispielsweise hälftig, zurückgesetzt. Dadurch wird sichergestellt, dass auf dem nächsten Schleifvorgang entsprechend früher hingewiesen wird.

Sodann wird ein Zähler der Gesamtanzahl der Schleifvorgänge des Kreismessers 3 inkrementiert.

In Schritt 208 wird anschließend geprüft, ob diese Gesamtanzahl eine vordefinierte Schleifhöchstanzahl überschreitet.

Ist dies der Fall (in Fig. 5 mit "+" markiert), so wird in **Schritt 209** auf der Signalausgabeeinheit 6 ein Hinweissignal ausgegeben, dass das Kreismesser 3 auszutauschen ist. Anschließend wird wieder mit Schritt 203 fortgefahren.
Ist dies *nicht* der Fall (in Fig. 5 mit dem Symbol "-" markiert), so wird das Verfahren direkt mit Schritt 203 fortgesetzt.

### Bezugszeichenliste

- 1: Scheibenschneidemaschine
- 2: Schneideeinrichtung
- 3: Kreismesser
- 4: Messerüberwachungseinrichtung
- 5: Steuereinheit
- 6: Signalausgabeeinheit
- 7: Displayeinheit
- 8: Messerschleifvorrichtung
- 9: Schlitten
- 10: Kettenrahmen
- 11: Abschläger
- 12: Ablagetisch
- 13: Schleifüberwachungsvorrichtung
- 14: Akustikausgabeeinheit
- 15: Messermotor
- 16: Motorstromversorgung
- 17: Strommessvorrichtung
- 18: nicht-flüchtiger Datenspeicher
- 19: Steuerleitung

- 201, 202, 203, 204, 205, 206, 207, 208, 209, 210: Verfahrensschritt

- Aᵤ, Aₗ: Fläche
- G₁, G₂: Grenzwert
- I: Strom
- I₁₀₀, I₁₀₁, I₁₀₂, I₁₀₃, I₁₀₄, I₁₀₅: Messermotorstrom
- I_{E}: Entgratungsstrom
- Iₗ: Lastabhängiger Stromanteil
- I_{R}: Rückschubstrom
- I_{S}: Schneidstrom
- I_{Schl}: Schleifstrom
- Iᵤ, I_{u'}: Lastunabhängiger Stromanteil
- I_{Um}: Umschaltstrom
- K_{A}: Abnutzungskennwert
- K_{S}: Messerschärfekennwer
- K_{V}: Verschmutzungskennwert

- P_{Schl}: Schleifphase
- P_{Um}: Umschaltphase
- P_{E}: Entgratungsphase
- t: Zeit
- tₛ: Startzeitpunkt
- t_{SchlS}: Schleifstartzeitpunkt
- t_{SchlE}: Schleifendzeitpunkt
- t_{ES}: Entgratungsstartzeitpunkt
- t_{EE}: Entgratungsendzeitpunkt
- tₑ: Endzeitpunkt
- t_{z}: Zwischenzeitpunkt
- Z: Zwischenergebnis

## Patentansprüche

1. Elektrisch betriebene Scheibenschneidemaschine (1) zum Abschneiden von Scheiben aus insbesondere strangförmigem Schneidgut, vorzugsweise Lebensmittel, mit einer Schneideeinrichtung (2), wobei die Schneideeinrichtung (2) ein von einem elektrischen Messermotor (15) angetriebenes, rotierendes Kreismesser (3) umfasst, und mit einer Messerüberwachungseinrichtung (4) zur Überwachung des Zustands des Kreismessers (3),
**dadurch gekennzeichnet,**
**dass** die Messerüberwachungseinrichtung (4) eine Strommessvorrichtung (17) zur Messung des Messermotorstroms (I₁₀₀, I₁₀₁, I₁₀₂, I₁₀₃, I₁₀₄, I₁₀₅) aufweist.

2. Scheibenschneidemaschine nach Anspruch 1, **dadurch gekennzeichnet, dass** die Scheibenschneidemaschine (1), vorzugsweise die Messerüberwachungseinrichtung (4), eine Steuereinheit (5) aufweist, die eingerichtet ist, aus dem aktuell gemessenen Messermotorstrom (I₁₀₀, I₁₀₁, I₁₀₂, I₁₀₃, I₁₀₄, I₁₀₅) und/oder dessen zeitlichen Verlauf einen Schneidkennwert, insbesondere einen Verschmutzungskennwert (K_{V}) und/oder einen Abnutzungskennwert (K_{A}) und/oder einen Messerschärfekennwert (K_{S}), zu ermitteln.

3. Scheibenschneidemaschine nach einem der vorhergehenden Ansprüche, **dadurch gekennzeichnet, dass** die Scheibenschneidemaschine (1) eine Schleifüberwachungsvorrichtung (13) zur Überwachung eines Schleifvorgangs mittels einer Messerschleifvorrichtung (8) aufweist.

4. Scheibenschneidemaschine nach einem der vorhergehenden Ansprüche, **dadurch gekennzeichnet, dass** die Scheibenschneidemaschine (1) eine Signalausgabeeinheit (6), insbesondere eine Displayeinheit (7) und/oder eine Akustikausgabeeinheit (14), aufweist, mittels derer optisch und/oder akustisch auf die Notwendigkeit der Einleitung eines Messerschleifvorgangs hingewiesen werden kann.

5. Verfahren zur Überwachung einer elektrisch betriebenen Scheibenschneidemaschine (1) zum Abschneiden von Scheiben aus insbesondere strangförmigem Schneidgut, vorzugsweise Lebensmittel, nach einem der vorhergehenden Ansprüche, mit einer Schneideeinrichtung (2), wobei die Schneideeinrichtung (2) ein von einem elektrischen Messermotor (15) angetriebenes, rotierendes Kreismesser (3) umfasst, und mit einer Messerüberwachungseinrichtung (4) zur Überwachung des Zustands des Kreismessers (3),
**dadurch gekennzeichnet,**
**dass** als Messdaten zur Eingabe in die Messerüberwachungseinrichtung (4) der Messermotorstrom (I₁₀₀, I₁₀₁, I₁₀₂, I₁₀₃, I₁₀₄, I₁₀₅) und/oder dessen zeitlicher Verlauf erfasst wird;
und **dass** aus diesen Messdaten ein aktueller Schneidkennwert, insbesondere ein Verschmutzungskennwert (K_{V}) und/oder ein Abnutzungskennwert (K_{A}) und/oder ein Messerschärfekennwert (K_{S}), ermittelt wird.

6. Verfahren nach Anspruch 5, **dadurch gekennzeichnet, dass** als Messdaten ein lastabhängiger Stromanteil (Iₗ) und/oder ein lastunabhängiger Stromanteil (Iᵤ, I_{u'}) des Messermotorstroms (I₁₀₀, I₁₀₁, I₁₀₂, I₁₀₃, I₁₀₄, I₁₀₅) ermittelt werden.

7. Verfahren nach Anspruch 6, **dadurch gekennzeichnet, dass** aus dem lastunabhängigen Stromanteil (Iᵤ, I_{u'}) der Verschmutzungskennwert (K_{V}) und/oder der Abnutzungskennwert (K_{A}) und/oder aus dem lastabhängigen Stromanteil (Iₗ) der Messerschärfekennwert (K_{S}) abgeleitet wird.

8. Verfahren nach einem der Ansprüche 6 oder 7, **dadurch gekennzeichnet, dass** der aktuelle lastunabhängige Stromanteil (Iᵤ, I_{u'}) in vordefinierten Zeitintervallen, infolge vordefinierter Ereignisse, insbesondere infolge eines Einschaltens der Scheibenschneidemaschine (1), und/oder nach Erreichen einer vordefinierten, insbesondere periodischen, Schneideleistungsgrenze ermittelt wird.

9. Verfahren nach Anspruch 8, **dadurch gekennzeichnet, dass**, insbesondere zu Beginn jeder Inbetriebnahme der Scheibenschneidemaschine (1), zunächst der Leerlaufstrom des Messermotors gemessen und damit der aktuelle lastunabhängige Stromanteil (Iᵤ, I_{u'}) ermittelt wird.

10. Verfahren nach einem der Ansprüche 5 bis 9, **dadurch gekennzeichnet, dass** die Messdaten oder aus den Messdaten ermittelte Zwischenergebnisse (Z), insbesondere ein Nettostrom des Messermotors, in einem nicht-flüchtigen Datenspeicher (18) zwischengespeichert werden.

11. Verfahren nach einem der Ansprüche 5 bis 10, **dadurch gekennzeichnet, dass** als Zwischenergebnis (Z) ein Integralwert, insbesondere beginnend ab Abschluss eines vorhergehend abgelaufenen Messerschleifprogramms, ermittelt wird.

12. Verfahren nach einem der Ansprüche 5 bis 11, **dadurch gekennzeichnet, dass** mit einem Messdatum und/oder mit einem Zwischenergebnis (Z) ein Soll-/Ist-Vergleich zu einem vordefinierten Grenzwert G₁ und/oder zu einem dynamisch ermittelten Grenzwert G₂ erfolgt.

13. Verfahren nach Anspruch 12, **dadurch gekennzeichnet, dass** ein Hinweissignal über eine Signalausgabeeinheit (6), insbesondere eine Displayeinheit (7) und/oder eine Akustikausgabeeinheit, ausgegeben wird, wenn der Wert des Schneidkennwerts den vordefinierten Grenzwert G₁ und/oder den dynamisch ermittelten Grenzwert G₂ erreicht und/oder über- oder unterschreitet.

14. Verfahren nach einem der Ansprüche 12 oder 13, **dadurch gekennzeichnet, dass** ein Messerschleifprogramm zur Schärfung des Kreismessers (3) gestartet wird, wenn der Wert des Schneidkennwerts den vordefinierten Grenzwert G₁ und/oder den dynamisch ermittelten Grenzwert G₂ erreicht und/oder über- oder unterschreitet.

15. Verfahren nach einem der Ansprüche 5 bis 14, **dadurch gekennzeichnet, dass** ein Betrieb der Scheibenschneidemaschine (1) im Messerschleifprogramm mittels des Messermotorstroms (I₁₀₀, I₁₀₁, I₁₀₂, I₁₀₃, I₁₀₄, I₁₀₅) und/oder dessen zeitlichen Verlaufs detektiert, überwacht, insbesondere dessen Zeitdauer gemessen, und/oder gesteuert, insbesondere beendet, wird.

16. Verfahren nach einem der Ansprüche 5 bis 15, **dadurch gekennzeichnet, dass** ein Entgratungsvorgang des Kreismessers (3) anhand des Messermotorstroms (I₁₀₀, I₁₀₁, I₁₀₂, I₁₀₃, I₁₀₄, I₁₀₅) und/oder dessen zeitlichen Verlaufs detektiert, überwacht, insbesondere dessen Zeitdauer gemessen, gesteuert, insbesondere beendet, wird und/oder auf der Signalausgabeeinheit (6) ein Entgratungs-Hinweissignal ausgegeben wird, das auf einen ausstehenden und/oder einen erfolgten Entgratungsvorgang hinweist.
